**Europäisches Patentamt**

**European Patent Office**

**Office européen des brevets**

(19)

(11) Veröffentlichungsnummer: **0 144 803**
**B1**

(12) **EUROPÄISCHE PATENTSCHRIFT**

(45) Veröffentlichungstag der Patentschrift:
21.09.88

(21) Anmeldenummer: 84113594.0

(22) Anmeldetag: 10.11.84

(51) Int. Cl.⁴: **G 01 L 3/10**

(54) Berührungsfreie Messvorrichtung für Drehmoment und/oder Drehwinkel.

(30) Priorität: 06.12.83 DE 3344385

(43) Veröffentlichungstag der Anmeldung:
19.06.85 Patentblatt 85/25

(45) Bekanntmachung des Hinweises auf die Patenterteilung:
21.09.88 Patentblatt 88/38

(84) Benannte Vertragsstaaten:
AT DE FR IT

(56) Entgegenhaltungen:
DE-A-3 307 105
US-A-2 476 410
US-A-2 737 049

(73) Patentinhaber: ROBERT BOSCH GMBH, Postfach
50, D-7000 Stuttgart 1 (DE)

(72) Erfinder: Dobler, Klaus, Dr. Ing., Bettäckerstrasse
12, D-7016 Gerlingen (DE)
Erfinder: Hachtel, Hansjörg, Buchenstrasse 4,
D-7251 Weissach (DE)

EP 0 144 803 B1

## Beschreibung

Die Erfindung geht aus von einer Meßvorrichtung nach der Gattung des Hauptanspruchs. Eine solche berührungsfrei arbeitende Meßvorrichtung ist aus der Druckschrift US-A-2 476 410 bekannt. Hier wird eine Drehmomentmeßwelle beschrieben, deren relativ zueinander verschiebbare Meßteile an ihren Enden in axialer Richtung ausgebildete Zähne aufweisen. Die Verschiebung der Zähne zueinander wird nach dem kapazitiven Meßprinzip bestimmt. Die Meßteile sind an einem torsionsweichem auf eine Meßwelle aufschiebbarem Rohr befestigt.

Ferner ist eine berührungsfrei arbeitende Meßvorrichtung zur Erfassung eines Drehwinkels und/oder eines Drehmoments an einer stehenden oder rotierenden Welle aus der US-A-4 356 732 bekannt. Diese bekannte Meßeinrichtung bestimmt das auf die Welle wirkende Drehmoment und/oder den Drehwinkel, um welchen sich ein vorgegebener Wellenabschnitt verdreht, durch Ausnutzen des Wirbelstromeffekts und ordnet einer konzentrischen Spule oder auch Flachspule zwei konzentrische Körper zu, die aus elektrisch leitendem Werkstoff bestehen und deren gemeinsame Überdeckungsfläche sich mit zunehmendem, zwischen den beiden Körpern auftretenden Verdrehwinkel ändert. Die beiden Körper sind mit ihren jeweiligen einen Enden drehfest mit der Welle verbunden und können ihre gemeinsame Überdekkungsfläche dadurch ändern, daß sie Ausschnitte aufweisen und die Ausschnitte des einen Körpers Fenster für die zwischen den Ausschnitten befindlichen Speichen des anderen Körpers bilden. Durch die Relativverdrehung der beiden, etwa als Scheiben, vorzugsweise aber in Form von ineinander konzentrisch verschachtelten Zylindern ausgebildeten Körpern ändert sich die auf die Meßspule zur Ausnutzung des Wirbelstromeffekts wirksame Materialfläche der beiden Körper. Als problematisch könnte bei der bekannten Meßeinrichtung allerdings angesehen werden, daß für den jeweils gewünschten Meßbereich immer ein speziell ausgelegter Drehmomentsensor verwendet und in der erwähnten Weise an der Welle befestigt werden muß, deren Drehmoment und/oder Drehwinkel bestimmt werden soll. Es ergibt sich so ein erheblicher Aufwand an Anpassungsarbeit für konstruktiv vorgegebene Einbaumöglichkeiten, insbesondere wenn der bekannte Drehmomentsensor zur Anwendung beispielsweise für Messungen bei Kraftfahrzeugen u. dgl. eingesetzt werden soll. Vermehrte Schwierigkeiten können sich in diesem Zusammenhang auch ergeben, wenn die Messungen an rotierenden Wellen durchzuführen sind und das Meßsystem stationär gehalten werden sollte. Dies ist bei der betrachteten berührungsfreien Meßvorrichtung, die sich das Wirbelstromprinzip zunutze macht, zwar problemlos möglich; es müssen dann aber noch gesondert Lagermöglichkeiten für das Meßsystem angrenzend oder konzentrisch zu den jeweils gegeneinander verdrehbaren Körper vorgesehen werden, vorzugsweise unmittelbar an der rotierenden Welle montiert.

In der DE-AI-3 307 105 ist eine Ausbildung eines Wirbelstromsensors mit Hilfe zweier relativ zueinander verschiebbaren Schlitzhülsen beschrieben. Auch diese Schlitzhülsen sind direkt auf der Drehwelle befestigt.

Der Erfindung liegt daher die Aufgabe zugrunde, eine berührungsfrei arbeitende Meßvorrichtung für Drehmoment und/oder Drehwinkel, vorzugsweise unter Zugrundelegung des Mirbelstromprinzips, zu schaffen, die sich zur universellen Anwendung bei allgemeinen Meßzwecken eignet, schnell an beliebige Wellen montiert und von dieser auch wieder gelöst werden kann und vorzugsweise in der komplett aufgebauten Baukastenform auch schon geeicht ist.

Die Erfindung löst diese Aufgabe mit den kennzeichnenden Merkmalen des Hauptanspruchs und hat gegenüber den bekannten berührungsfreien Meßvorrichtungen den Vorteil, daß ein eine komplette Einheit bildendes Drehmoment- oder Drehwinkel-Meßsystem geschaffen und so aufgebaut ist, daß dieses als Ganzes auf konstruktiv bereits vorhandene Wellen aufgesetzt und sofort in Betrieb genommen werden kann.

Von besonderem Vorteil ist die durch die Erfindung gebotene Möglichkeit der Austauschbarkeit der Torsionswelle und die hierdurch erzielte jeweilige Anpassung des Drehmomentsensors an den gewünschten Meßbereich. Die Erfindung ermöglicht daher eine erhebliche Erweiterung des Anwendungsbereichs und die Anpassung an spezielle Meßaufgaben, die hierdurch vom Hersteller des Drehmomentsensors auch auf den Anwender ausgedehnt wird.

Die Erfindung ist nicht auf die Anwendung des Wirbelstrom-Meßsystems beschränkt, nutzt dieses aber bei einem bevorzugten Ausführungsbeispiel mit Vorteil aus und bildet eine durchgeeichte und auf den jeweiligen Meßbereich eingestellte Einheit, gegebenenfalls mit beidseitigen Anpassungsfittingen, die nach Montage auf die jeweilige Welle sofort zu Meßzwecken eingesetzt werden kann. Dabei kann ein Teil des Drehmoments von dem torsionsweichen Rohr aufgenommen werden, welches als universelle Lagerung für sämtliche erfindungsgemäße Meßeinrichtungen bildende Teilkomponenten dient; die vorherige Eichung berücksichtigt diese Drehmomentübernahme automatisch.

Durch die in den abhängigen Ansprüchen aufgeführten Maßnahmen sind vorteilhafte Weiterbildungen und Verbesserungen der im Hauptanspruch angegebenen berührungsfreien Meßvorrichtung möglich. Besonders vorteilhaft ist die Ausbildung des torsionsfreien Rohres als gemeinsamer Träger für alle Komponenten, wobei weiter nach innen versetzt die beiden vorzugsweise zylindrisch ineinandergreifenden Drehkörper auf dem Rohr angeordnet sind und nach außen beidseitig Kugellager vorgesehen sind, zur stationären Lagerung des elektrischen Teils des Meßsystems, so daß die Spulenableitungen nicht über Schleifmittel erfolgen müssen, was auch zu erheblichen Verfälschungen führen könnte. Die Befestigung des kompletten Lagerrohrs mit dem aufgebauten Meßsystem erfolgt dann endseitig durch eine kraft- oder formschlüssige Verbindung mit der Drehwelle, deren übertragendes Drehmoment bestimmt werden soll. Durchmesseranpassungen können über entsprechende Zwischenhülsen erfolgen.

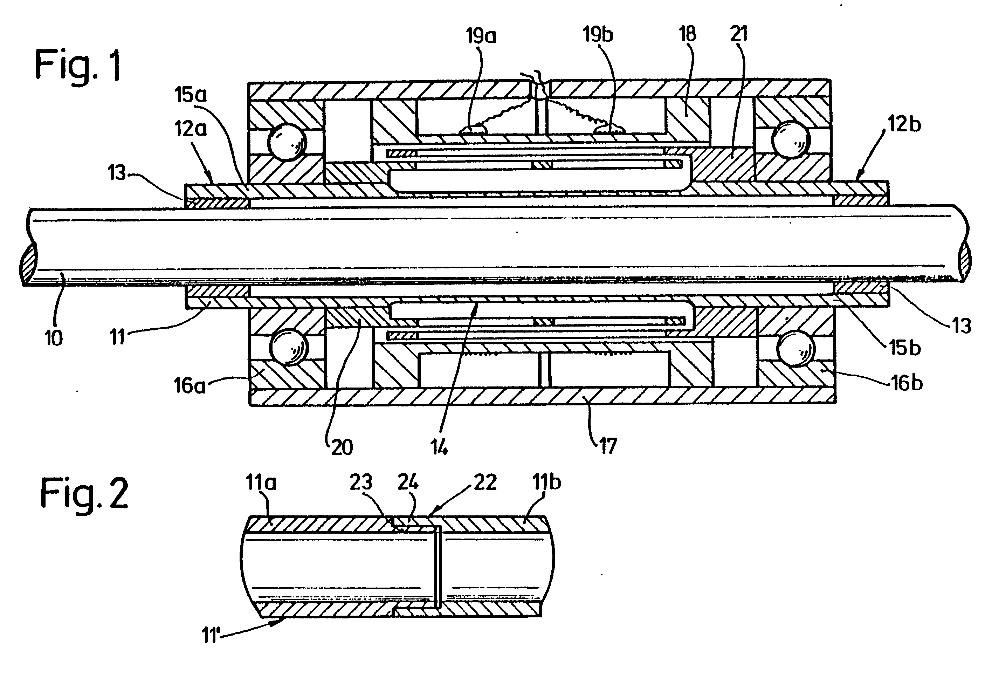

Es zeigen Fig. 1 im Querschnitt ein auf der Dreh- oder Torsionswelle komplett aufgebautes Meßsystem und Fig. 2 lediglich als Ausschnitt ein torsionsweiches, hier völlig torsionsloses Lagerrohr für das Meßsystem, ohne die weiteren, noch vorgesehenen, das Drehmoment-Meßsystem vervollständigenden Komponenten. Figur 1 wird nicht beansprucht!

Die Dreh- oder Torsionswelle ist in Fig. 1 mit 10 bezeichnet; es kann sich um eine stehende oder rotierende Welle handeln, die ein Drehmoment überträgt und hierdurch auch, auf eine vorgegebene Längeneinheit bezogen, eine bestimmte Winkelverdrehung relativ in sich erleidet, also tordiert wird, so daß die Welle im folgenden auch als Torsionswelle bezeichnet wird. Zur Messung des Drehwinkels und daraus resultierend des übertragenen Drehmoments dient eine berührungsfreie Meßvorrichtung, die als Ganzes von der Torsionswelle 10 getragen und auf dieser befestigt ist und die ihrerseits als gemeinsame Lagerung für sämtliche, die Meßeinrichtung bildenden Komponenten ein torsionsweiches Rohr 11 umfaßt, welches endseitig, und zwar wie angedeutet bei 12a und 12b drehfest mit der Torsionswelle 10 im jeweils vorgegebenen Abstand verbunden ist. Die Verbindungen 12a, 12b können kraft- oder formschlüssig sein; sie sind jedoch auf jeden Fall drehfest mit Bezug auf die Torsionswelle 10 durchzuführen, so daß die durch das Drehmoment verursachte Drehung der Torsionswelle 10 in das vom torsionsweichen Rohr 11 getragene Meßsystem eingeleitet wird. Zur Verbindung der Rohrenden des torsionsweichen Rohres 11 mit der Torsionswelle 10 können Schrauben, Stifte, Klemmmittel, Klebverbindungen o. dgl. vorgesehen sein, wobei bei unterschiedlichen Durchmessern - Innendurchmesser des torsionsweichen Rohres 11 und Außendurchmesser der Welle 10 - entsprechende Zwischenhülsen 13 vorgesehen sein können.

Die Torsionsweichheit des torsionsweichen Rohres 11 kann, wie in der Darstellung der Fig. 1 angedeutet, durch eine geringere Wandstärke hauptsächlich im mittleren Bereich, entsprechend dem Bezugszeichen 14 erreicht werden; aber auch durch eine geringere Wandstärke über die gesamte Rohrlänge, durch Aussparungen, beispielsweise Schlitze, durch eine besondere Materialauswahl mit geringem E-Modul, oder schließlich durch eine mechanische Trennung der beiden Seiten über einen verdrehbaren Paßsitz, wie dies in Fig. 2 gezeigt ist; hierauf wird weiter unten noch genauer eingegangen.

Sinnvollerweise verfügt das torsionsweiche Rohr 11 bis zu den Stellen, an denen, nach innen greifend, die einen Enden der gegeneinander verdrehbaren Körper befestigt sind, noch über torsionsfeste Rohrbereiche 15a, 15b, so daß die an den Befestigungspunkten - angedeutet durch die Verbindungen 12a, 12b - mit der Torsionswelle 10 auftretenden Verdrehungen jedenfalls unverfälscht bis zu den Angriffspunkten der verdrehbaren Körper übertragen werden. Hierdurch wird jedenfalls die Größe des Meßausschlags maximal gehalten.

Von innen nach außen lagert das torsionsweiche Rohr 11 zunächst beidseitig Kugellager 16a, 16b, die die Aufgabe haben, ein stationäres Gehäuse 17, welches die Form eines zylindrischen Rohrstücks hat und mit den Außenringen der Kugellager 16a, 16b fest verbunden ist, stationär zu halten. Die Aufgabe des stationären Gehäuses 17 besteht darin, nach innen und in etwa mittig einen Spulenkörper 18 zu tragen, der die mindestens eine, vorzugsweise zwei Meßspulen 19a, 19b des Systems aufnimmt.

Die folgenden Ausführungen beziehen sich auf die Ausbildung des Drehmoment-Meßsystems unter Ausnutzung des Wirbelstromprinzips; innerhalb des erfindungsgemäßen Rahmens liegt aber die Verwendung einer Vielzahl sonstiger, für die Durchführung solcher Messungen geeigneter Meßsysteme, wenn zwei relativ zueinander verdrehbare Körper in ihrer Wegänderung durch geeignete Mittel erfaßt werden sollen. So ist beispielsweise die Anwendung des induktiven Prinzips problemlos möglich, da das Einwandern weiterer Materialteile in die Fensterbereiche eines äußeren Hülsenkörpers induktiv erfaßt werden kann; sonstige Meßsysteme können beispielsweise kapazitive, optische, magnetostriktive Systeme sein oder die Relativverdrehung des Torsionsrohrs läßt sich auch mittels Dehnungsmeßstreifen u. dgl, erfassen.

Bei dem dargestellten Ausführungsbeispiel wird bevorzugt das Wirbelstromprinzip zur Messung verwendet und in diesem Fall sind die beiden relativ zueinander verdrehbaren Körper als eine innere Schlitzhülse 20 und als eine äußere Schlitzhülse 21 ausgebildet, die jeweils mit einem verdickten, voneinander abgewandten endseitigen Flansch fest und unverrückbar mit dem torsionsweichen Rohr 11, und zwar noch mit dessen torsionsfesten Teilbereichen 15a, 15b, verbunden sind. Es ergeben sich so zwei konzentrisch mit zylindrischen Hülsenformen ineinandergreifende Körper, die über ihren Umfang und über ihre Längserstreckung verteilt über Schlitze, Fenster oder Ausnehmungen verfügen und wobei diese Schlitze, wie in der eingangs schon genannten US-PS-4 350 739 umfassend erläutert, durch die relative vinkelverdrehung des Rohrabschnitts der Torsionswelle 10, mit dessen Endbereichen das torsionsweiche Rohr 11 fest verbunden ist, gegeneinander eine solche Relativverschiebung erfahren, daß sich das den Meßspulen 19a, 19b gegenüberliegende, hier elektrisch gut leitende und vorzugsweise dia- und paramagnetisches Material in seiner Menge oder seiner Oberfläche verändert. Hierdurch ergeben sich je nach Drehwinkel, unterschiedliche Wirbelstromeinflüsse auf die beiden Meßspulen 19a, 19b und da Wirbelströme Spulenverluste darstellen, ändern sich entsprechend dem relativen Drehwinkel auch die an den Meßspulen 19a, 19b abfallenden Spannungen. Die Meßspulen 19a, 19b - es ist selbstverständlich auch möglich, von nur einer Meßspule auszugehenkönnen dann beispielsweise nach Art einer Wheatstone'schen Halbbrücke miteinander verschaltet sein. Dies ist nicht Gegenstand vorliegender Erfindung und daher wird hierauf auch nicht weiter eingegangen.

Wird als Lagerung für das gesamte Meßsystem ein lediglich relativ torsionsweiches Rohr 11 verwendet, wie in Fig. 1 dargestellt, dann übernimmt das Rohr 11 einen, wenn auch relativ geringen Teil des von der Torsionswelle 10 insgesamt übertragenen Drehmoments; dies wird aber bei einer Eichung des zusammengebauten Systems automatisch berücksichtigt.

Alternativ ist es möglich, die Torsionsweichheit des Lagerrohrs 11 bis zur Fähigkeit der Drehmomentübertragung Null zu erweitern, d.h., das torsionsweiche Rohr 11 als ohne Widerstand ineinander verdrehbares Teil auszubilden, wie in Fig. 2 gezeigt. Bei diesem Ausführungsbeispiel, welches lediglich innere, ineinandergreifende Abschnitte des torsionsweichen Rohres 11' zeigt, bildet dieses mit sich einen ohne Widerstand verdrehbaren Sitz, wie bei 22 angedeutet. Der Sitz ist gebildet durch eine innere axiale Erstreckung 23 des in der Zeichenebene der Fig. 2 linken Rohrteils 11a, welche Verlängerung in einen durch eine innere Abschulterung am anderen Rohrteil 11b gebildeten Außenring 24 eingreift. Wird die "Torsionsweichheit" durch eine solche mechanische Trennung der beiden Torsionsrohrseiten 11a, 11b über verdrehbarem Paßsitz herbeigeführt, dann muß in diesem Fall allerdings, wie ohne weiteres erkennbar, die Justage des die relative Drewinkeländerung oder das übertragene Drehmoment erfassende Meßsystems bei Montieren auf die Torsionswelle 10 erfolgen. Es versteht sich im übrigen, daß das torsionsweiche Rohr 11, 11', da es gleichzeitig die Lagerung für das gesamte Meßsystem und die restlichen, beteiligten Komponenten bildet, möglichst biegesteif ausgebildet ist.

Entsprechend den Merkmalen des Anspruchs 1 wird das Ausführungsbeispiel nach Figur 1 nicht beansprucht.

## Patentansprüche

1. Berührungsfreie Meßvorrichtung für Drehmoment und/oder Drehwinkel an stehenden oder rotierenden Wellen (10), mit zwei zur Welle (10) konzentrischen, vorzugsweise zylindrischen, mit ihren jeweiligen Endbereichen drehfest an der Welle befestigten und gegeneinander verdrehbaren Körpern (20, 21), ferner mit einem Meßsystem (19a, 19b), welches aus der sich mit dem Verdrehungswinkel ändernden Relativposition der beiden Körper (20, 21) das von der Welle (10) ubertragene Drehmoment und/oder des Drehwinkels über einen vorgegebenen Wellenabschnitt ermittelt und die gegeneinander verdrehbaren Körper (20, 21) und das Meßsystem (19a, 19b) auf einem torsionsweichen Rohr (11') als gemeinsamen Träger aufgebaut sind und das Rohr (11') mit seinen Endbereichen drehfest mit der Welle verbunden ist, dadurch gekennzeichnet, daß das torsionsweiche Rohr (11'), mechanisch getrennt und einen die beidseitigen Rohrhälften (11a, 11b) verbindenden, verdrehbaren Paßsitz aufweist.

2. Meßvorrichtung nach Anspruch 1, dadurch gekennzeichnet, daß sich zur Messung nach dem Wirbelstromprinzip die relative Überdeckungsfläche der beiden Körper (20, 21) mit dem Verdrehungswinkel ändert und der sich ändernden, relativen Überdeckungsfläche der beiden Körper mindestens eine den durch die Körper bewirkten Wirbelstromeffekt erfassende Meßspule (19a, 19b) gegenüberliegt.

3. Meßvorrichtung nach Anspruch 1 oder 2, dadurch gekennzeichnet, daß die Körper relativ zueinander verdrehbare, konzentrisch ineinander gelagerte innere und äußere Schlitzhülsen sind, die mit ihren entgegengesetzten Enden im Abstand fest mit dem torsionsweichen Rohr (11') verbunden sind.

4. Meßvorrichtung nach einem der Ansprüche 1 bis 3, dadurch gekennzeichnet, daß das torsionsweiche Rohr (11') mit seinen äußeren Endbereichen, gegebenenfalls unter Zwischenlegen von Durchmesserabständen ausgleichenden Hülsen (13) durch Schrauben, Stifte, Klemmverbindungen oder Klebverbindungen mit der Welle (10) verbunden ist.

5. Meßvorrichtung nach einem oder mehreren der Ansprüche 1 bis 4, dadurch gekennzeichnet, daß von außen nach innen beidseitig auf dem torsionsweichen Rohr (11') ein stationäres Gehäuse (17) in Form eines Rohrteils stationär lagernde Kugellager (16a, 16b) und an diese angrenzend verdickte Flanschteile der inneren und äußeren Schlitzhülsen befestigt sind.

6. Meßvorrichtung nach Anspruch 5, dadurch gekennzeichnet, daß das stationäre Gehäuse (17) nach innen einen Spulenkörper (18) lagert, der mindestens eine Meßspule (19a, 19b) trägt.

7. Meßvorrichtung nach einem der Ansprüche 1 bis 6, dadurch gekennzeichnet, daß die Welle eine Torsionswelle (10) ist.

## Claims

1. Contactless measuring device for torque and/or angle of rotation on stationary or rotating shafts (10), comprising two preferably cylindrical bodies (20, 21) which are concentric to the shaft (10), are attached, with their respective end areas, to the shaft to rotate therewith and can be turned with respect to one another, also comprising a measuring system (19a, 19b) which determines from the relative position of the two bodies (20, 21), which changes with the turning angle, the torque and/or the angle of rotation transmitted from the shaft (10) over a predetermined shaft section and the bodies (20, 21) which can be turned with respect to one another and the measuring system (19a, 19b) are built up on a torsionally elastic tube (11') as the common carrier and the tube (11') is connected with its end areas to the shaft to rotate therewith, characterized in that the torsionally elastic tube (11') is mechanically separate and exhibits a press fit which can be turned and connects the tube halves ( 11a, 11b) on both sides.

2. Measuring device according to claim 1, characterized in that the relative overlap area of the two bodies (20, 21) changes with the turning angle for measuring according to the eddy current principle and at least one measuring coil (19a, 19b) detecting the eddy current effect caused by the bodies is located opposite the changing relative overlap area of the two bodies.

3. Measuring device according to claim 1 or 2, characterized in that the bodies are inner and outer slotted sleeves which can be turned relative to one another and are concentrically supported within each other and the opposite ends of which are permanently connected to the torsionally elastic tube (11') at a distance.

4. Measuring device according to one of claims 1 to 3, characterized in that the torsionally elastic tube (11') is connected with its outer end areas to the shaft (10) by means of screws, pins, clamping connections or adhesive connections, possibly with interposition of sleeves (13) compensating for diameter distances.

5. Measuring device according to one or more of claims 1 to 4, characterized in that, from the outside to the inside, a stationary housing (17) in the form of a tube section, ballbearings ( 16a, 16b) acting as stationary bearings, and, adjoining these, enlarged flange parts of the inner and outer slotted sleeves are attached on both sides to the torsionally elastic tube (11').

6. Measuring device according to claim 5, characterized in that the stationary housing (17) supports towards the inside a coil former (18) which carries at least one measuring coil (19a, 19b).

7. Measuring device according to one of claims 1 to 6, characterized in that the shaft is a torsion shaft (10).

## Revendications

1. Dispositif de mesure de couple et/ou d'angle de rotation, sans contact pour des arbres (10) fixes ou rotatifs, dispositif comportant deux organes rotatifs (20, 21) concentriques à l'arbre (10), de préférence sous forme de cylindres, et dont les zones d'extrémité respectives sont fixées solidairement à l'arbre et peuvent se tourner de manière relative, avec un système de mesure (19a, 19b) qui détermine la position relative variable en fonction de l'angle de rotation des deux organes (20, 21) pour déterminer le couple et/ou l'angle de rotation transmis par l'arbre (10) par l'intermédiaire d'un segment d'arbre prédéterminé, et les organes (20, 21) susceptibles de tourner l'un par rapport à l'autre et le système de mesure (19a, 19b) sont montés sur un tube (11') souple en torsion constituant le support commun (11'), dont les extrémités sont reliées solidairement à l'arbre, dispositif caractérisé en ce que le tube souple en torsion (11') comporte un siège ajusté, mécaniquement distinct, susceptible de tourner et qui relie les deux moitiés de tube (11a, 11b).

2. Dispositif de mesure selon la revendication 1, caractérisé en ce que pour effectuer la mesure selon le principe des courants de Foucault, on modifie la surface de recouvrement relative des deux organes (20, 21) en fonction de l'angle de rotation et la surface de recouvrement relative variable des deux organes est située au moins en regard d'une bobine de mesure (19a, 19b) qui détecte l'effet des courants de Foucault engendrés par les organes.

3. Dispositif de mesure selon la revendication 1 ou 2, caractérisé en ce que les organes sont des manchons fendus montés de manière concentrique intérieurement et extérieurement et qui peuvent tourner l'un par rapport à l'autre, les extrémités opposées de ces organes étant reliées à distance avec le tube souple en torsion (11).

4. Dispositif de mesure selon l'une des revendications 1 à 3, caractérisé en ce que le tube souple en torsion (11') est relié par ses zones d'extrémité extérieures, le cas échéant avec interposition de manchons (13) de compensation de diamètre, par des vis, des goujons, des liaisons de serrage ou des liaisons collées à l'arbre (10).

5. Dispositif de mesure selon l'une ou plusieurs des revendications 1 à 4, caractérisé en ce que de l'extérieur vers l'intérieur, de part et d'autre sur le tube (11') souple en torsion, on a fixé un boîtier (17) fixe sous la forme d'un palier à billes (16a, 16b) portant de manière fixe une partie de tube et sur les manchons fendus intérieurs et extérieurs adjacents à ces parties de bride renforcées.

6. Dispositif de mesure selon la revendication 5, caractérisé en ce que le boîtier fixe (17) porte un corps de bobine (18) dirigé vers l'intérieur et qui est muni d'au moins une bobine de mesure (19a, 19b).

7. Dispositif de mesure selon l'une des revendications 1 à 6, caractérisé en ce que l'arbre est un arbre de torsion (10).

Fig. 1

Fig. 2

0 144 803